# EUROPÄISCHE PATENTSCHRIFT

(11) **EP 1 261 770 B1**
(45) Veröffentlichungstag und Bekanntmachung des Hinweises auf die Patenterteilung: **26.01.2005**
(21) Anmeldenummer: 01915191.9
(22) Anmeldetag: 03.02.2001
(51) Int. Cl.: D21B 1/02, B07B 4/02

(54) **VERFAHREN UND VORRICHTUNG ZUR STEUERUNG DES WEISSEGRADES EINES SCHÜTTGUTES AUS ZERKLEINERTEN PAPIERFRAKTIONEN**
METHOD AND DEVICE FOR ADJUSTING THE WHITENESS DEGREE OF A BULK MATERIAL CONSISTING OF COMMINUTED PAPER FRACTIONS
PROCEDE ET DISPOSITIF POUR REGULER LE DEGRE DE BLANC D'UN PRODUIT EN VRAC COMPOSE DE MORCEAUX DE PAPIER FRACTIONNES

(30) Priorität: 07.03.2000 DE 10010354
(43) Veröffentlichungstag der Anmeldung: 04.12.2002
(73) Patentinhaber: Bückmann GmbH, 41238 Mönchengladbach (DE); Trienekens AG Sortier- und Aufbereitungsanlagen, 41061 Mönchengladbach (DE)
(72) Erfinder: STRAETMANS, Klaus, 47647 Kerken (DE); HÜSKENS, Jürgen, 41748 Viersen (DE)
(74) Vertreter: COHAUSZ & FLORACK
(86) Internationale Anmeldenummer: PCT/EP2001/001173
(87) Internationale Veröffentlichungsnummer: WO 2001/066852

(56) Entgegenhaltungen:
- EP-A- 0 034 382
- DE-A- 2 542 571
- GB-A- 1 498 767
- US-A- 3 929 628
- US-A- 4 010 096

## Beschreibung

Die Erfindung betrifft ein Verfahren und eine Vorrichtung zur Steuerung des Weißegrades eines Schüttgutes aus zerkleinerten Papierfraktionen, insbesondere Deinkingware, wobei das Schüttgut Fraktionen im wesentlichen aus Zeitungspapier, Illustriertenpapier und in geringem Maße Störstoffen enthält.

In Deutschland werden derzeit ca. 12 Mio. t/a Altpapier in Produktionsprozesse wieder eingesetzt. Von dieser Menge werden wiederum ca. 5,3 Mio. t/a in zahlreichen Einrichtungen vor der jeweiligen Wiederverwertung in verschiedenen Sorten, u. a. Deinkingware sortiert.

Die Deinkingware dient unter anderem als Rohstoff für Zeitungspapier und höherwertige graphische Papiere und wird im allgemeinen in einem Pulper aufgelöst bzw. zu einer Fasersuspension (Pulpe) aufbereitet. Die Verweildauer in einem Pulper zur Auflösung üblicher Deinkingware erreicht bis zu 20 Minuten. Die Pulpe wird über große Siebe abgepumpt und einer Reinigung zur Entfernung unerwünschter Bestandteile zugeführt, die bei der Herstellung, beim Gebrauch oder Verbrauch von Papier oder Aufbereitung des wiederum entstehenden Altpapiers eingebracht werden oder die Qualität der Neupapiere beeinträchtigen würden. Die unerwünschten Bestandteile umfassen unter anderem Beschichtungsmaterial von Milchbecherkarton, Folien, Heftklammern, naßfeste Papiere, Styropor aus Verpackungsstoffen und Pappe. Die Reinigung umfaßt Sieb-, Wasch- und Flotationsbehandlungen. Im einzelnen umfaßt eine übliche Reinigung u. a. mehrere Siebstufen, wie z. B. einen Fiberizer, mit welchem bei etwa 7 bis 8 mm abgesiebt wird, Feinsiebe mit Sieböffnungsdurchmessern von in etwa 1,4 und 2,6 mm sowie Hydrozyklone.

Deinkingware wird im allgemeinen durch eine Sortierung von Altpapier gewonnen, bei der auch eine Fraktion gemischtes Altpapier und eine Fraktion Kaufhausaltpapier anfallen kann. Bekannte Deinkingware besteht weitgehend aus unzerkleinerten Zeitungen und Illustrierten und weist im allgemeinen mindestens 40 Gew.-% Tageszeitungen, mindestens 40 Gew.-% Illustrierte und graphische Papiere, zusammen aber etwa 97 Gew.-%, sowie einen Gesamtstörstoffanteil, unter anderem Sand, Glas, Heftklammern, Kartonage, Pappen und Künststoffen von etwa 3 Gew.-% auf. Dabei ist zu berücksichtigen, daß die Zusammensetzung der Deinkingware auch jahreszeitlichen Schwankungen unterliegt. Denn erfahrungsgemäß ist in der winterlichen Jahreszeit der Anteil der Kataloge, die dem Anteil an Illustrierten zukommen, höher als in der sommerlichen Jahreszeit.

Eine Eingangskontrolle von Altpapierlieferungen der Sorte Deinkingware kann neben einer herkömmlichen Probensortierung und Verwiegung einzelner aussortierter Komponenten auch nach der INGEDE - Methode erfolgen, bei der eine Probe auf einer Beobachtungsfläche ausgebreitet wird und einzelne Komponenten auf der Beobachtungsfläche gezählt oder geschätzt und mit zuvor ermittelten Gewichtsfraktionen multipliziert werden.

Aus der DE 25 42 571 A1 ist ein Verfahren zur Sortentrennung von Altpapieren bekannt, bei dem das Altpapier direkt in einen Zerkleinerer gegeben und das zerkleinerte Altpapier mittels zweier hintereinander geschalteter Windsichtungen in drei Fraktionen aufgespaltet wird. Hierbei ist vorgesehen, daß zerkleinerte Altpapier in dem ersten Windsichter aufzulockern und eine erste schwere Fraktion, welche Pappen, Kartonagen und schwere Kaftpapiere stark angereichert enthält, abzuspalten. Die verbleibende leichte Fraktion aus dem ersten Windsichter wird dann dem zweiten Windsichter zugeführt und in eine zweite schwere Fraktion getrennt, die Pappen, Kartonagen und schwere Kaftpapiere stark angereichert enthält, sowie in eine leichte Fraktion, die Illustrierte, Zeitungen und sonstige Pressepapiere stark angereichert enthält. Da im gesammelten Altpapier schwere Störstoffe, wie z. B. Metall, Sand, Glas etc. enthalten sind, können diese überwiegend kleine Teile hierbei in das erste und zweite Schwergut gelangen, so daß diese Schwergutfraktionen und damit ein erheblicher Teil des eingesetzten Altpapiers nicht als höherwertige Altpapiersorten vermarktbar sind. Darüber hinaus besteht die Gefahr, daß zerkleinerte Katalogrücken, die durch Kleber oder Klammern zusammengehalten sind, in die erste und/oder zweite schwere Fraktion geraten und deren Vermarktbarkeit als Kaufhausaltpapier einschränken. Die vorgeschlagene Auflockerung und Desagglorneration mittels des ersten Windsichters ermöglicht zwar prinzipiell eine wirksame Sortentrennung in dem zweiten Windsichter, erfordert jedoch aufgrund der hohen Luftströme einen hohen Energieeinsatz und führt aufgrund der hohen Luftgeschwindigkeit und der Störstoffe zu einem relativ hohen Verschleiß.

Aus der PCT/EP99/03578 ist ein Verfahren und eine Einrichtung bekannt, bei dem bzw. mit der das Papiergemisch auf eine Korngröße im Bereich von etwa 40 bis 100 mm zerkleinert und das zerkleinerte Papiergemisch mittels Windsichtung bei einer Trenngeschwindigkeit zwischen 1 bis 5 m/sec in eine Mischpapier enthaltende Schwergutfraktion und eine Deinking enthaltende Leichgutfraktion getrennt wird. Darüber hinaus wird in der PCT/EP99/03578 vorgeschlagen, der Zerkleinerung des Papiergemisches eine Auflockerungsstufe und eine Siebung vorzuschalten.

Aus der nachveröffentlichten DE 199 57 993 ist weiterhin ein Kegelsichter zum Sichten eines Schüttgutes aus zerkleinerten Papierfraktionen bekannt, der mit Hilfe zweier Querstromsichtstufen sowie einer Gegenstromsichtstufe ein effektives Trennen von Pappe als Schwergutfraktion sowie von Zeitungspapier und Illustriertenpapier als Leichtgutfraktion ermöglicht. Diese Leichtgutfraktion kann als Deinkingware weiter verwendet werden, wobei sich die Leichtgutfraktion insbesondere dadurch auszeichnet, daß im Gegensatz zu manuell sortierter Deinkingware annähernd kein Schwereschmutzanteil vorhanden ist und der Anteil der Störstoffe deutlich unterhalb 3 Gew.-% liegt.

Die Effektivität des zuvor beschriebenen Kegelsichters bei der Trennung der Schwergut- und Leichtgutfraktionen ist so hoch, daß je nach Zusammensetzung des Ausgangsschüttgutes der Anteil an Zeitungspapier in der Deinkingware zu hoch im Vergleich zum Anteil des Illustriertenpapieres ist. Dadurch wird zum einen die Ausgangsweiße bei einer Weiterverarbeitung der Deinkingware herabgesetzt und zum anderem ist das Aufhellungspotential deutlich reduziert. Weiterhin hat sich als problematisch im Vergleich zu manuell sortierter Deinkingware herausgestellt, daß durch die Verwendung von zerkleinerten Papierfraktionen der Staubanteil in der Deinkingware so groß ist, daß während einer Weiterverarbeitung, insbesondere während eines Schüttens in Vorratsbehälter oder während einer Förderung auf Laufbändern mit Fallstrecken, die Staubentwicklung sehr hoch ist.

Der vorliegenden Erfindung liegt daher das technische Problem zugrunde, das Verfahren und die Vorrichtung zur Steuerung des Weißegrades eines Schüttgutes aus zerkleinerten Papierfraktionen weiter zu verbessern, so daß Weißegrade der Deinkingware verbessert wird.

Das zuvor aufgezeigte technische Problem wird erfindungsgemäß durch ein Verfahren gemäß Anspruch 1 dadurch gelöst, daß das Schüttgut mit Hilfe einer Windsichtung in eine Leichtgutfraktion und eine Schwergutfraktion aufgeteilt wird und daß als Leichtgutfraktion zumindest ein Teil, vorzugsweise der größte Teil der im Schüttgut enthaltenen Staubpartikel abgetrennt wird. Erfindungsgemäß ist erkannt worden, daß die Staubpartikel, die während des Zerkleinerns der Papierfraktionen sowie durch weitere Reibung der Papierpartikel aneinander und an begrenzenden Wänden zu einem wesentlichen Teil aus Druckfarbe bestehen. Da Staubpartikel auch aus kleinsten Fasern aus Zeitungspapier bestehen können, wird mit dem Staub nicht zuletzt auch ein Teil der Fraktion des Zeitungspapiers abgetrennt. Wird daher ein großer Teil des Staubes, wenn nicht gar nahezu der gesamte Staub aus der Deinkingware abgetrennt, so wird der Weißegrad der Deinkingware gegenüber dem bisher angewandten Verfahren verbessert. Gleichzeitig wird erreicht, daß bei einer Weiterverarbeitung der Deinkingware die Staubentwicklung erheblich reduziert wird. Das Verfahren kann also insbesondere auch dazu eingesetzt werden, um die oben erwähnten jahreszeitlichen Schwankungen der Zusammensetzung der Deinkingware auszugleichen.

In bevorzugter Weise wird bei dem Verfahren neben den Staubpartikeln zusätzlich ein Teil der Fraktion aus Zeitungspapier abgetrennt. Da Zeitungspapierpartikel ein geringeres Eigengewicht als Partikel aus Illustriertenpapier haben, werden diese bei einer genau dosierten Trenngeschwindigkeit des Zuluftstromes im verwendeten Windsichter von einander getrennt, so daß neben Staubpartikeln auch kleinere und kleinste Partikel aus Zeitungspapier in die Leichtgutfraktion abgetrennt werden. Dadurch wird eine weitere Verbesserung des Weißegrades der Deinkingware erreicht, da der Anteil des Zeitungspapiers in der Schwergutfraktion, also der Deinkingware reduziert wird.

In weiter bevorzugter Weise wird das Verhältnis der Anteile aus Zeitungspapier und Illustriertenpapier in der Schwergutfraktion über die Stärke der Trenngeschwindigkeit des Sichtungsluftstromes geregelt. Denn abhängig von der Trenngeschwindigkeit werden neben den Staubpartikeln mehr oder weniger Partikel aus Zeitungspapier aus dem Schüttgut abgetrennt, so daß je nach Zusammensetzung des eingeführten Schüttgutes die Zusammensetzung der Schwergutfraktion, also der Deinikingware eingestellt werden kann.

In besonders vorteilhafter Weise wird in mindestens einer als Quersichtung ausgebildeten Hauptsichtstufe die Leichtgutfraktion aus dem Schüttgut abgetrennt, wobei in einer im wesentlichen als Gegenstromsichtung ausgebildeten Nachsichtstufe schwerere Partikel aus der abgetrennten Leichtgutfraktion abgetrennt und der Schwergutfraktion wieder zugeführt werden. Dabei wird die Trenngeschwindigkeit des Sichtungsluftstromes an der Abwurfkante der Hauptsichtstufe im Bereich von 1 bis 3 m/s, insbesondere von 1,5 bis 2,5 m/s eingestellt. Diese niedrigen Trenngeschwindigkeiten werden dem Umstand gerecht, daß Staubpartikel und Partikel aus Zeitungspapier, also sehr leichte Partikel von Partikeln aus Illustriertenpapier bzw. schwerere Partikel aus Zeitungspapier getrennt werden sollen. Dabei sind die spezifischen Gewichte der verschiedenen Partikel im Schüttgut sehr gering, so daß die genannten niedrigen Trenngeschwindigkeiten eingehalten werden müssen.

Bei einer weiteren bevorzugten Ausgestaltung der vorliegenden Erfindung wird die Trenngeschwindigkeit in der Nachsichtstufe im Mittel kleiner als die Trenngeschwindigkeit an der Abwurfkante der Hauptsichtstufe eingestellt, wobei die Trenngeschwindigkeiten sich um Faktor 1,1 bis 1,8, insbesondere 1,2 bis 1,6 und vorzugsweise 1,3 bis 1,4 unterscheiden. Die Differenz zwischen den Trenngeschwindigkeiten in der Nachsichtstufe und in der Hauptsichtstufe kann durch unterschiedliche Strömungsquerschnitte in beiden Sichtstufen vorgegeben werden, was weiter unten noch im Detail beschrieben wird.

Das zuvor beschriebene Verfahren zur Steuerung des Weißegrades eines Schüttgutes aus zerkleinerten Papierfraktionen kann mit einem Schüttgut durchgeführt werden, das mit Hilfe einer ersten Windsichtung, insbesondere mit Hilfe eines Kegelsichters, aus einer aus einem Ausgangsschüttgut abgetrennten Leichtgutfraktion besteht, während die dabei entstehende Schwergutfraktion hauptsächlich Pappmaterial enthält. Mit dieser ersten Windsichtung läßt sich ein Schüttgut herstellen, das im wesentlichen 40 bis 60 Gew.-% Zeitungspapier, weniger als 3 Gew.-% Störstoffe und als Rest Illustriertenpapier aufweist. Mit dem erfindungsgemäßen Verfahren kann dann der Anteil des Zeitungspapiers zugunsten des Anteils des Illustriertenpapiers verringert werden, wodurch der Weißegrad des Deinkingmaterials verbessert wird.

Das oben genannte technische Problem wird erfindungsgemäß auch durch einen Windsichter zur Durchführung eines Verfahrens zur Steuerung des Weißegrades eines Schüttgutes aus zerkleinerten Papierfraktionen mit den Merkmalen des Anspruches 10 gelöst. Der Windsichter ist dadurch charakterisiert, daß ein Gehäuse mit einem Schüttguteinlaß vorgesehen ist, in dem eine als Quersichtung ausgebildete Hauptsichtstufe und eine im wesentlichen als Gegenstromsichtung ausgebildete Nachsichtstufe vorgesehen sind. Erfindungsgemäß ist die Querschnittfläche der Nachsichtstufe um einen Faktor von 1,1 bis 1,8 mal größer als die Querschnittsfläche der Hauptsichtstufe ausgebildet. Insbesondere beträgt der Faktor 1,2 bis 1,6 und vorzugsweise 1,3 bis 1,4. Diese Faktoren entsprechen dem für eine bevorzugte Ausgestaltung des Verfahrens angegebenen Faktor für die unterschiedlichen Trenngeschwindigkeiten.

Für die angegebenen jeweils kleineren Werte des Faktors gilt, daß die Trenngeschwindigkeit in der Nachsichtstufe eine geringere Differenz zur Trenngeschwindigkeit in der Hauptsichtstufe aufweist, wodurch sichergestellt wird, daß die abgetrennten Staubpartikel und die leichten Partikel aus Zeitungspapier sicher in der Leichtgutfraktion verbleiben und nicht aufgrund einer geringeren Trenngeschwindigkeit wieder absinken. Zudem bedeutet eine geringe Differenz des Strömungsquerschnittes in der Nachsichtstufe, daß zur Aufrechterhaltung der erforderlichen Trenngeschwindigkeit kein zu großer Luftstrom erzeugt werden muß. Schließlich kann es bei nur geringen Differenzen der Strömungsquerschnitte zwischen der Nachsichtstufe und der Hauptsichtstufe nur in geringem Maße zu Verstopfungen kommen.

Die Vorteile der größeren Werte des Faktors liegen darin, daß verhindert wird, daß in der Leichtgutfraktion auch Partikel enthalten sind, die eigentlich in die Schwergutfraktion gehören. Denn die Trenngeschwindigkeiten sind so unterschiedlich, daß der Sichtungsluftstrom ausreicht, um ein Partikel aus Zeitungspapier aufgrund seiner dem Sichtungsluftstrom an der Abwurfkante zugewandte Fläche in die Nachsichtstufe hinein zu transportieren. Dort wird das Partikel aus Zeitungspapier nur einem geringeren Sichtungsluftstrom ausgesetzt und zudem verwirbelt, so daß eine geringere Angriffsfläche einem Sichtungsluftstrom mit geringerer Trenngeschwindigkeit ausgesetzt ist. Dadurch wird dieses Partikel aus Zeitungspapier wieder absinken und der Schwergutfraktion wieder zugeleitet.

Ein weiteres Kriterium für die Wirksamkeit des Windsichters ist der Winkel, unter dem die zur Hauptsichtstufe gehörende Leitfläche zur Senkrechten ausgerichtet ist. In bevorzugter Weise liegt dieser Winkel im Bereich von 60° bis 75° und insbesondere im Bereich von 60° bis 70°. Bei einer besonders bevorzugten Ausgestaltung beträgt der Winkel im wesentlichen 65°. Dadurch wird in zuverlässiger Weise vermieden, daß es im Bereich der Leitfläche zu Verstopfungen kommt, die bei zu geringem Neigungswinkel zur Waagerechten auftreten würden. Darüber hinaus sind die angegebenen Winkel genügend flach, daß zum einen die Bauhöhe des Windsichters begrenzt werden kann und daß die Strömungsgeschwindigkeitsverteilung an der Abwurfkante der Hauptsichtstufe deutlich ausgeprägt ist, also an der Abwurfkante ein deutliches Maximum an Trenngeschwindigkeiten aufweist.

Bei einem weiteren bevorzugten Ausführungsbeispiel des beschriebenen Windsichters ist unterhalb der Hauptsichtstufe mindestens eine weitere als Quersichtung ausgebildete Sichtstufe vorgesehen. Durch eine Mehrzahl von Quersichtungen wird die Trennschärfe des Windsichters erheblich verbessert.

Schließlich kann die beschriebene Leitfläche der Hauptsichtstufe zumindest abschnittsweise als Anströmboden ausgebildet sein, der mit einem separaten Lufteinlaß verbunden ist. Der Anströmboden ist luftdurchlässig und weist dazu vorzugsweise eine Vielzahl von Löchern auf. Daneben kann der Anströmboden auch aus porösem Material oder aus Gewebe bestehen. Der Zweck des Anströmboden ist es, sich auf der Leitfläche, bzw. auf dem Anströmboden ablagernde Partikel anzuheben und somit eine Verstopfung im Ansatz zu vermeiden. Es handelt sich dabei um eine effektive Maßnahme, bei der zusätzlich ein Luftstrom in den Windsichter eingeführt wird, um bei zu flachem Winkel der Leitfläche zur Waagerechten ein Verstopfen zu vermeiden. Somit können auch flachere Winkel als zuvor angegeben eingestellt werden. Zur Einstellung der Luftströmung durch den Anströmboden kann weiterhin ein Drosselventil in dem Lufteinlaß angeordnet sein.

Im folgenden wird die Erfindung anhand eines Ausführungsbeispieles näher erläutert, wobei auf die beigefügte Zeichnung bezug genommen wird. In der Zeichnung zeigen
- Fig. 1: ein erstes Ausführungsbeispiel eines erfindungsgemäßen Windsichters,
- Fig. 2: den in Fig. 1 dargestellten Windsichter mit eingezeichneten Partikeln des Schüttgutes,
- Fig. 3: ein zweites Ausführungsbeispiel eines erfindungsgemäßen Windsichters und
- Fig. 4: die Anordnung des in Fig. 3 dargestellten Windsichters in einer Anlage zum Erzeugen von Deinkingware aus einem Ausgangsschüttgut.

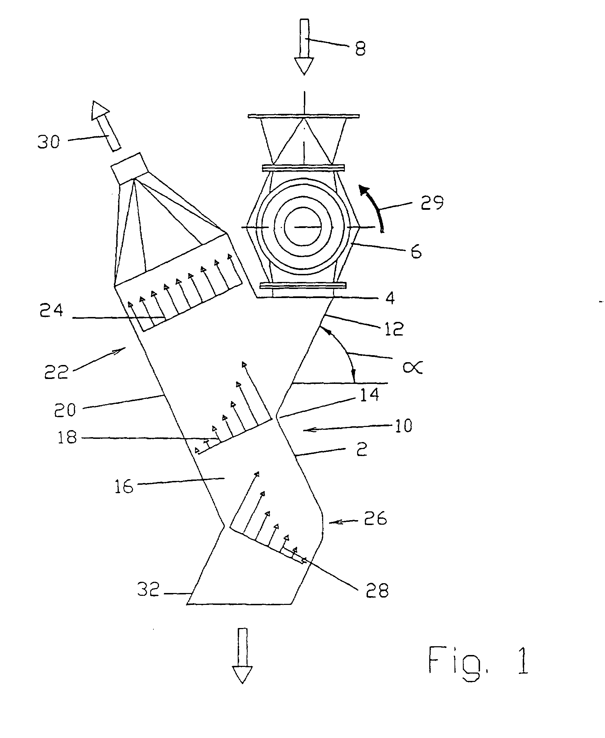

Fig. 1 zeigt ein erstes Ausführungsbeispiel eines Windsichters zur Durchführung eines Verfahrens zur Steuerung des Weißegrades eines Schüttgutes aus zerkleinerten Papierfraktionen, insbesondere Deinkingware. Der Windsichter weist ein Gehäuse 2 mit einem Schüttguteinlaß 4 auf, über den mit Hilfe einer Zellenradschleuse 6 das mit dem Pfeil 8 gekennzeichnete Schüttgut durch den Schüttguteinlaß in Richtung einer als Quersichtung ausgebildeten Hauptsichtstufe 10 in den Windsichter eingetragen wird. Zunächst gelangt dabei das Schüttgut auf eine Leitfläche 12, die das Schüttgut einer Abwurfkante 14 zuführt. Unterhalb der Abwurfkante 14 ist ein Zuluftkanal 16 der Hauptsichtstufe 10 angeordnet. Der über den Zuluftkanal 16 zugeführte Sichtungsluftstrom weist aufgrund der Formgebung des Zuluftkanals 16 eine mit den Pfeilen 18 charakterisierte Verteilung der Strömungsgeschwindigkeit auf. Daraus wird deutlich, daß im Bereich der Abwurfkante 14 die größte Luftgeschwindigkeit, die sogenannten Trenngeschwindigkeit erreicht wird. Daher werden die Partikel des Schüttgutes gerade an der Abwurfkante 14 mit einer maximalen Trenngeschwindigkeit beaufschlagt, während an der der Abwurfkanten 14 gegenüberliegend angeordneten Seitenwand 20 des Gehäuses 2 eine minimale Strömungsgeschwindigkeit vorherrscht.

Der Windsichter weist weiterhin eine Nachsichtstufe 22 auf, die im wesentlichen als Gegenstromsichtung ausgebildet ist. Die Nachsichtstufe 22 weist dabei eine gegenüber der Senkrechten geneigte Achse auf, was im wesentlichen aus konstruktive Gründen bedingt ist.

Wie Fig. 1 weiterhin zumindest schematisch zeigt, ist die Abmessung der Nachsichtstufe 22 in der Zeichenebene größer als die Abmessung des Zuluftkanals 16, also der Hauptsichtstufe 10. Erfindungsgemäß liegt der Faktor, um den die Querschnittsfläche der Nachsichtstufe 22 größer als die Querschnittsfläche der Hauptsichtstufe 10 ist, im Bereich von 1,1 bis 1,8. In bevorzugter Weise liegt der Faktor im Bereich von 1,2 bis 1,6 und insbesondere von 1,3 bis 1,4.

Durch den größeren Querschnitt ist die Trenngeschwindigkeit in der Nachsichtstufe 22 im Mittel um die entsprechenden Faktoren kleiner als die Trenngeschwindigkeit an der Abwurfkante 14 der Hauptsichtstufe 10. Durch die im Mittel kleiner vorliegende Trenngeschwindigkeit kann fehlgeleitetes Schwergut wieder innerhalb der Nachsichtstufe 22 absinken und wird entlang der Seitenwand 20 wieder dem Schwergutstrom zugeführt. Die Stärke des Sichtungsluftstromes ist mit den Pfeilen 24 dargestellt, wobei die Länge der Pfeile 24 im Vergleich zu dem größten Pfeil 18 in der Hauptsichtstufe 10 geringer sind.

Wie weiterhin in Fig. 1 zu erkennen ist, ist die Leitfläche 12 nach unten unter einem vorgegebenen Winkel α von 65° zur Waagerechten ausgerichtet. Dieser Wert liegt in dem erfindungsgemäßen Bereich von 60° bis 75°, insbesondere von 60° bis 70°.

Schließlich ist in Fig. 1 dargestellt, daß unterhalb der Hauptsichtstufe 10 eine weitere als Quersichtung ausgebildete Sichtstufe 26 vorgesehen ist, in der mit Pfeilen 28 die Strömungsgeschwindigkeitsverteilung in zur Hauptsichtstufe 10 mit den Pfeilen 18 dargestellten Verteilung ähnlichen Form. In der Sichtstufe 26 wird die Schwergutfraktion, die aus der Hauptsichtstufe 10 ausgetreten ist, erneut einer Quersichtung unterzogen.

Am Ausgang 30 verläßt dann die Abluft mit der Leichtgutfraktion, die aus Staubpartikeln und Partikeln aus Zeitungspapier besteht, den Windsichter. Am Ausgang 32 wird das Schwergut ausgetragen, das als Deinkingware einer Papieraufbereitungsanlage zugeführt werden kann.

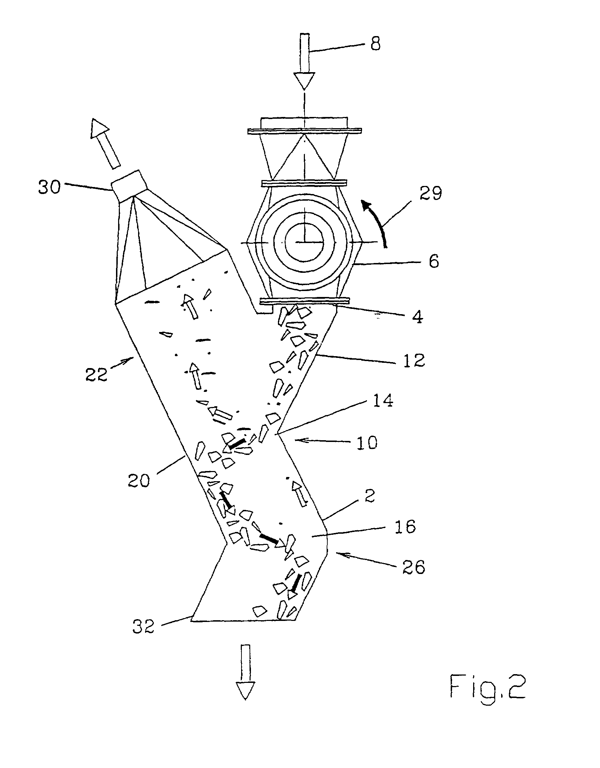

Fig. 2 zeigt den zuvor beschriebenen Windsichter mit den im Mischgut enthaltenden Partikeln aus Staub, Zeitungspapier und Illustriertenpapier. Im Bereich der Hauptsichtstufe 10 werden vom aufsteigenden Luftstrom, der mit nicht ausgefüllten Pfeilen dargestellt ist, in die Nachsichtstufe 22 transportiert. Innerhalb der Nachsichtstufe 22 läßt die Strömungsgeschwindigkeit nach, so daß einzelne Partikel absinken und dem Strom der Schwergutfraktion zugeführt werden. Dieser Strom ist nach unten gerichtet und ist mit den schwarz dargestellten Pfeilen charakterisiert. Im Bereich der Sichtstufe 26 wird dann erneut der Partikelstrom einer Quersichtung unterzogen, so daß mit dem nach oben aufsteigenden Sichtungsluftstrom Staubpartikel und gegebenenfalls auch Partikel aus Zeitungspapier nach oben zur Hauptsichtstufe 10 und darüber hinaus in die Nachsichtstufe 22 transportiert werden.

Wie mit dem Pfeil 29 angedeutet ist, sollte die Drehrichtung der Zellenradschleuse in Fig. 2 entgegen dem Uhrzeigersinn verlaufen, damit die eingetragenen Partikel des Schüttgutes auf die Leitfläche 12 gelangen. Somit wird sichergestellt, daß die Partikel des Schüttgutes in geeigneter Weise zur Abwurfkante 14 geführt werden.

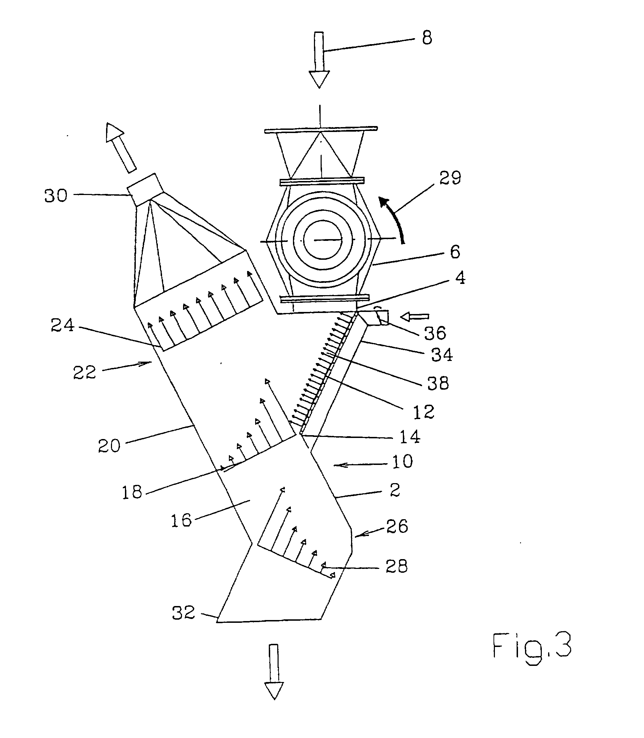

Fig. 3 zeigt ein weiteres Ausführungsbeispiel eines erfindungsgemäßen Windsichters, wobei gleiche Bezugszeichen gleiche Bauteile bezeichnen, die zuvor anhand der Fig. 1 und 2 beschrieben worden sind.

Zusätzlich zum ersten Ausführungsbeispiel ist die Leitfläche 12 als Anströmboden ausgebildet, der mit einer Zuluft führenden Leitung 34 verbunden ist, in der ein Drosselventil 36 angeordnet ist, um die Intensität der Luftströmung durch den Anströmboden hindurch zu regulieren. Diese Luftströmung ist durch eine Vielzahl von Pfeilen 38 dargestellt. Mit Hilfe der Luftströmung wird verhindert, daß sich die Partikel aus dem Schüttgut an der Oberfläche der Leitfläche 12 anlagern und zu einer Verstopfung führen. Somit wird sichergestellt, daß sämtliches Schüttgut über die Leitfläche 12 zur Abwurfkante 14 gelangt und im Querstrom der Hauptsichtstufe 10 gesichtet wird. Mit anderen Worten, es wird der Reibwert entlang der Leitfläche reduziert.

Zudem wird durch die Luftströmung 38 bereits ein Teil der Staubpartikel in Richtung der Nachsichtzone 22 geführt, so daß diese an der Abwurfkante 14 bzw. in der Nachsichtzone besser abgeschieden werden können.

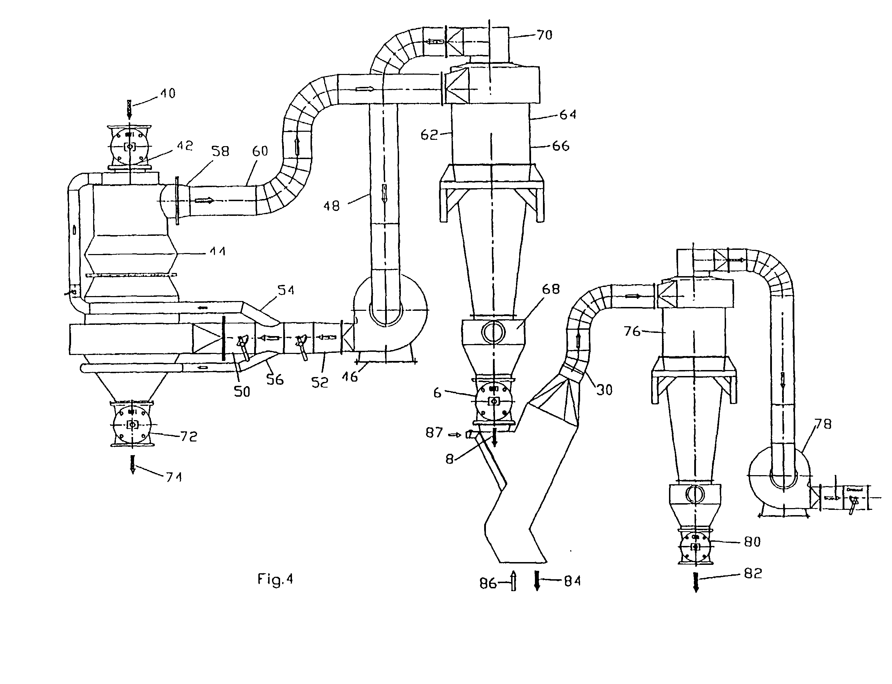

Fig. 4 zeigt schließlich den erfindungsgemäßen Windsichter zusammen mit einer Vorrichtung zum Erzeugen von Deinkingware.

Das Ausgangsmaterial, siehe Pfeil 40, wird über eine Zellenradschleuse 42 in einen Kegelsichter 44 eingeführt, der bspw. so ausgebildet sein kann, wie es in der nachveröffentlichten DE 199 57 993 ausführlich beschrieben worden ist. Der Kegelsichter 44 wird mit einer umlaufenden geschlossenen Luftströmung betrieben. Dazu ist ein Ventilator 46 vorgesehen, der über eine Ansaugleitung 48 Luft ansaugt und diese am Ausgang mit erhöhtem Druck an den Hauptlufteinlaß 50 des Kegelsichters 44 über die Zuleitung 52 abgibt. Entlang der Zuleitung 52 sind zwei Nebenleitungen 54 und 56 abgezweigt, die einer zusätzlichen Versorgung und Erzeugung von Luftströmungen innerhalb des Kegelsichters dienen. Aus dem Luftauslaß 58 tritt das im Kegelsichter 44 abgetrennte Leichtgut mit der Abluft in eine Abluftleitung 60 ein, die einem Eingang 62 eines Zyklons 64 verbunden ist. Innerhalb des zylindrischen Abschnittes 66 des Zyklons 64 wird die Abluft tangential eingelassen, so daß innerhalb des Zyklons 64 eine Rotationsströmung erzeugt wird. Dadurch kommt es zu Zentriefugalkräften, die das Leichtgut aus dem Luftstrom herausschleudern. Das Leichtgut bewegt sich dann aufgrund Luftströmung spiralförmig entlang der Behälterwand nach unten in den Beruhigungstrichter 68. Von dort gelangt das Leichtgut über die Zellenradschleuse 6 in den erfindungsgemäßen Windsichter für eine weitere Windsichtung in der Art, wie sie zuvor ausführlich beschrieben worden ist. Der vom Leichtgut abgetrennte Luftstrom gelangt innerhalb des Zyklons 64 in ein nicht dargestelltes Tauchrohr, das mit einem Auslaß 70 verbunden ist, der wiederum mit der Ansaugleitung 48 des Ventilators 46 verbunden ist. Daraus ergibt sich ein insgesamt geschlossener Umlaufbetrieb für den Kegelsichter 44. Über die Zellenradschleuse 42 sowie über die Zellenradschleusen 6 und 72 können von außen das Ausgangsmischgut und die abgetrennten Schwergut- und Leichtgutfraktionen ein- und ausgeführt werden, wie mit den Pfeilen 40 bzw. 8 und 74 dargestellt ist.

Im erfindungsgemäßen Windsichter findet erneut eine Abtrennung einer Leichtgutfraktion statt, die über den Ausgang 30 einem weiteren Zyklon 76 zugeführt wird. Dieser Zyklon arbeitet in gleicher Weise, wie es zuvor für den Zyklon 64 beschrieben worden ist. Über einen Ventilator 78 wird dazu eine Luftströmung erzeugt, die ausgehend vom erfindungsgemäßen Windsichter über den Zyklon 76 zum Ventilator 78 verläuft. Mit einer weiteren Zellenradschleuse 80 wird die Leichtgutfraktion, die aus Staub und Partikeln aus Zeitungspapier besteht, herausgelassen, wie mit den Pfeil 82 dargestellt ist. Dagegen tritt im erfindungsgemäßen Windsichter die Schwergutfraktion, die im wesentlichen aus Papier aus Illustrierten und Zeitungen besteht heraus, wie mit dem Pfeil 84 dargestellt ist. Die Pfeile 86 und 87 stellt dagegen die vom Ventilator 78 angesaugte Luft dar.

## Patentansprüche

1. Verfahren zur Steuerung des Weißegrades eines Schüttgutes aus zerkleinerten Papierfraktionen, insbesondere Deinkingware,
- wobei das Schüttgut Fraktionen im wesentlichen aus Zeitungspapier einerseits, Illustriertenpapier und graphischen Papier anderseits sowie einen geringen Anteil an Störstoffen enthält,
**dadurch gekennzeichnet,**
- **daß** der Weißegrad des Schüttgutes durch Abtrennen zumindest eines Teils der im Schüttgut enthaltenen Staubpartikel erhöht wird,
- wobei das Schüttgut mit Hilfe einer Windsichtung in eine Leichtgutfraktion und eine Schwergutfraktion aufgeteilt wird,
- wobei als Leichtgutfraktion zumindest ein Teil der im Schüttgut enthaltenen Staubpartikel abgetrennt wird und
- wobei als Schwergutfraktion die im Weißegrad verbesserte Papierfraktionen abgetrennt wird.

2. Verfahren nach Anspruch 1, **dadurch gekennzeichnet, daß** als Leichtgutfraktion zusätzlich ein Teil der Fraktion aus Zeitungspapier abgetrennt wird.

3. Verfahren nach Anspruch 1 oder 2, **dadurch gekennzeichnet, daß** das Verhältnis der Anteile aus Zeitungspapier und Illustriertenpapier in der Schwergutfraktion über die Größe der Trenngeschwindigkeit des Sichtungsluftstromes geregelt wird.

4. Verfahren nach einem der Ansprüche 1 bis 3, **dadurch gekennzeichnet, daß** in mindestens einer als Quersichtung ausgebildeten Hauptsichtstufe die Leichtgutfraktion aus dem Schüttgut abgetrennt wird und in einer im wesentlichen als Gegenstromsichtung ausgebildeten Nachsichtstufe schwerere Partikel aus der abgetrennten Leichtgutfraktion abgetrennt und der Schwergutfraktion wieder zugeführt werden.

5. Verfahren nach Anspruch 4, **dadurch gekennzeichnet, daß** die Trenngeschwindigkeit des Sichtungsluftstromes an der Abwurfkante der Hauptsichtstufe im Bereich von 1 bis 3 m/s, insbesondere von 1,5 bis 2,5 m/s eingestellt wird.

6. Verfahren nach Anspruch 4 oder 5, **dadurch gekennzeichnet, daß** die Trenngeschwindigkeit in der Nachsichtstufe im Mittel kleiner als die Trenngeschwindigkeit an der Abwurfkante der Hauptsichtstufe eingestellt wird.

7. Verfahren nach Anspruch 6, **dadurch gekennzeichnet, daß** die Trenngeschwindigkeit in der Nachsichtstufe im Mittel um den Faktor 1,1 bis 1,8, insbesondere 1,2 bis 1,6 vorzugsweise 1,3 bis 1,4 kleiner als die Trenngeschwindigkeit an der Abwurfkante der Hauptsichtstufe eingestellt wird.

8. Verfahren nach einem der Ansprüche 1 bis 7, **dadurch gekennzeichnet, daß** mit Hilfe einer ersten Windsichtung, insbesondere mit Hilfe eines Kegelsichters, ein Ausgangsschüttgut in eine das Schüttgut bildende Leichtgutfraktion und eine Schwergutfraktion aufgetrennt wird.

9. Verfahren nach einem der Ansprüche 1 bis 8, **dadurch gekennzeichnet, daß** das Schüttgut im wesentlichen 40-60 Gew.-% Zeitungspapier, weniger als 3 Gew.-% Störstoffe und als Rest Illustriertenpapier und graphisches Papier aufweist.

10. Windsichter zur Durchführung eines Verfahrens zur Steuerung des Weißegrades eines Schüttgutes aus zerkleinerten Papierfraktionen, insbesondere Deinkingware, insbesondere nach einem der vorangegangenen Ansprüche,
- mit einem Gehäuse (2), das einen Schüttguteinlaß (4) aufweist,
- mit einer als Quersichtung ausgebildeten Hauptsichtstufe (10), die eine Leitfläche (12) zum Zuführen des Schüttgutes zu einer Abwurfkante (14) und einen Zuluftkanal (16) aufweist, und
- mit einer im wesentlichen als Gegenstromsichtung ausgebildeten Nachsichtstufe (22),
**dadurch gekennzeichnet,**
- **daß** die Querschnittsfläche der Nachsichtstufe (22) um einen Faktor von 1,1 bis 1,8 mal größer als die Querschnittsfläche der Hauptsichtstufe (10) ausgebildet ist.

11. Windsichter nach Anspruch 10, **dadurch gekennzeichnet, daß** der Faktor 1,2 bis 1,6, insbesondere 1,3 bis 1,4 beträgt.

12. Windsichter nach Anspruch 10 oder 11, **dadurch gekennzeichnet, daß** die Leitfläche (12) nach unten unter einem vorgegebenen Winkel (α) im Bereich von 60° bis 75°, insbesondere von 60° bis 70° zur Waagerechten ausgerichtet ist.

13. Windsichter nach Anspruch 12, **dadurch gekennzeichnet, daß** der Winkel (α) im wesentlichen gleich 65° beträgt.

14. Windsichter nach einem der Ansprüche 10 bis 13, **dadurch gekennzeichnet, daß** unterhalb der Hauptsichtstufe (10) mindestens eine weitere als Quersichtung ausgebildete Sichtstufe (26) vorgesehen ist.

15. Windsichter nach einem der Ansprüche 10 bis 14, **dadurch gekennzeichnet, daß** die Leitfläche (12) zumindest abschnittsweise als Anströmboden ausgebildet ist, der mit einer Leitung (34) verbunden ist.

16. Windsichter nach Anspruch 15, **dadurch gekennzeichnet, daß** ein Drosselventil (36) in der Leitung (34) für eine Regulierung der Luftströmung durch den Anströmboden angeordnet ist.

## Claims

1. Method for controlling the brightness of a bulk material made of shredded paper fractions, especially deinking material,
- in which the bulk material contains fractions consisting, firstly, mainly of newspaper and secondly magazine paper and graphical paper and also a small proportion of problem materials,
- **characterised in that**
- the brightness of the bulk material is increased by separating at least part of the dust particles contained in the bulk material,
- whereby the bulk material is divided by wind sifting into a light fraction and a heavy fraction,
- whereby at least part of the dust particles contained in the bulk material is separated as light fraction and
- whereby the paper fraction with improved brightness is separated as heavy fraction.

2. Method according to claim 1, **characterised in that** a part of the fraction consisting of newspaper is also separated as light fraction.

3. Method according to claim 1 or 2, **characterised in that** the ratio of proportions consisting of newspaper and magazine paper in the heavy fraction is governed via the value of the separation rate of the sifting airflow.

4. Method according to one of claims 1 to 3, **characterised in that** in at least one main sifting stage in the form of a cross sifter, the light fraction is separated from the bulk material and in a resifting stage essentially in the form of a counterflow sifter, heavier particles are separated out of the separated light fraction and sent back to the heavy fraction.

5. Method according to claim 4, **characterised in that** the separation rate of the sifting air flow at the discharge end of the main sifting stage is set in the range of between 1 and 3 m/s, in particular between 1.5 and 2.5 m/s.

6. Method according to claim 4 or 5, **characterised in that** the separation rate in the resifting stage is set on average less than the separation rate at the discharge edge of the main sifting stage.

7. Method according to claim 6, **characterised in that** the separation rate in the resifting stage is set on average by a factor of 1.1 to 1.8, in particular 1.2 to 1.6, preferably 1.3 to 1.4 less than the separation rate at the discharge edge of the main sifting stage.

8. Methods according to one of claims 1 to 7, **characterised in that** with the aid of a first wind sifting, in particular with the aid of a cone sifter, an initial bulk material is separated into a light fraction forming the bulk material and a heavy fraction.

9. Method according to one of claims 1 to 8, **characterised in that** the bulk material contains basically 40-60% by weight of newspaper, less than 3 % by weight of problem materials and the rest is magazine paper and graphical paper.

10. Wind sifter to implement a method to control the brightness of a bulk material consisting of shredded paper fractions, especially deinking material, in particular according to one of the preceding claims,
- with a housing (2) which has a bulk material intake (4),
- with a main sifting stage (10) in the form of a cross sifter, which has a guide surface (12) to guide the bulk material to a discharge edge (14) and an air inlet channel (16), and
- with a resifting stage (22) essentially in the form of a counterflow sifter,
**characterised in that**
- the cross section area of the resifting stage (22) is designed to be greater by a factor of 1.1 to 1.8 times than the cross section area of the main sifting stage (10).

11. Wind sifter according to claim 10, **characterised in that** the factor is 1.2 to 1.6 in particular 1.3 to 1.4.

12. Wind sifter according to claim 10 or 11, **characterised in that** the guide surface (12) is aligned downwards at a specified angle (α) in the range of 60° to 75°, in particular from 60° to 70° to the perpendicular.

13. Wind sifter according to claim 12, **characterised in that** the angle (α) is more or less equal to 65°.

14. Wind sifter according to one of claims 10 to 13, **characterised in that** underneath the main sifting stage (10) there is at least one additional sifting stage (26) in the form of a cross sifter.

15. Wind sifter according to one of claims 10 to 14, **characterised in that** the guide surface (12) is in the form of a distributor plate which is connected with a conduit (34).

16. Wind sifter according to claim 15, **characterised in that** there is a flow control valve (36) in the conduit (34) to regulate the airflow through the distributor plate.

## Revendications

1. Procédé pour réguler le degré de blanc d'un produit en vrac composé de fractions de papier fragmentées, en particulier de produit désencré (deinking),
- le produit en vrac contenant des fractions essentiellement composées de papier journal d'une part, de papier illustré et de papier graphique d'autre part ainsi que d'une faible proportion de substances perturbatrices
**caractérisé**
- **en ce que** le degré de blanc du produit en vrac est accru par séparation au moins d'une partie des particules de poussière contenues dans le produit en vrac,
- le produit en vrac étant partagé à l'aide d'une séparation à air en une fraction de produits légers et une fraction de produits lourds, au moins une partie des particules de poussière contenues dans le produit en vrac étant séparée en tant que fraction de produits légers et
- la fraction de papier dont le degré de blanc est amélioré étant séparée en tant que fraction de produits lourds.

2. Procédé selon la revendication 1, **caractérisé en ce qu'**en outre, une partie de la fraction composée papier journal est séparée en tant que fraction de produits légers.

3. Procédé selon la revendication 1 ou 2, **caractérisé en ce que** le rapport des proportions en papier journal et en papier illustré dans la fraction de produits lourds est régulé par la grandeur de la vitesse de séparation du courant d'air de séparation.

4. Procédé selon une des revendications 1 à 3, **caractérisé en ce que** dans au moins un étage de séparation principal conçu comme séparation transversale, la fraction de produits légers est séparée du produit en vrac et dans un étage de séparation ultérieur conçu essentiellement comme séparation à contre courant, les particules plus lourdes sont séparées de la fraction de produits légers séparée et réinjectées dans la fraction de produits lourds.

5. Procédé selon la revendication 4, **caractérisé en ce que** la vitesse de séparation du courant d'air de séparation sur le côté déversement de l'étage de séparation principal est réglée dans la plage de 1 à 3 m / s, en particulier de 1,5 à 2,5 m / s.

6. Procédé selon la revendication 4 ou 5, **caractérisé en ce que** la vitesse de séparation à l'étage de séparation ultérieur est réglée pour être en moyenne plus petite que la vitesse de séparation sur le côté de déversement de l'étage de séparation principal.

7. Procédé selon la revendication 6, **caractérisé en ce que** la vitesse de séparation à l'étage de séparation ultérieur est réglée pour être en moyenne plus petite d'un facteur de 1,1 à 1,8, en particulier de 1,2 à 1,6, de préférence 1,3 à 1,4, que la vitesse de séparation sur le côté de déversement de l'étage de séparation principal.

8. Procédé selon une des revendications 1 à 7, **caractérisé en ce qu'**à l'aide d'une première séparation à air, en particulier à l'aide d'un séparateur conique, un produit en vrac de départ est divisé en une fraction de produits légers formant le produit en vrac et en une fraction de produits lourds.

9. Procédé selon une des revendications 1 à 8, **caractérisé en ce que** le produit en vrac présente essentiellement 40 - 60 % en poids de papier journal, moins de 3 % en poids de substances perturbatrices et pour le reste du papier illustré et du papier graphique.

10. Séparateur à air pour la mise en oeuvre d'un procédé pour réguler le degré de blanc d'un produit en vrac composé de fractions de papier fragmentées, en particulier de produit désencré (deinking), en particulier selon une des revendications précédentes, comprenant
- un logement (2) qui présente une entrée (4) pour le produit en vrac,
- un étage de séparation principal (10) conçu comme séparation transversale qui présente une surface de guidage (12) pour amener le produit en vrac jusqu'à un côté de déversement (14) et un canal d'amenée d'air (16) et
- un étage de séparation ultérieur (22) conçu essentiellement comme séparation à contre courant,
**caractérisé**
- **en ce que** la superficie de l'étage de séparation ultérieur (22) est configurée pour être plus grande d'un facteur de 1,1 à 1,9 que la superficie de l'étage de séparation principal (10).

11. Séparateur à air selon la revendication 10, **caractérisé en ce que** le facteur est de 1,2 à 1,6, en particulier de 1,3 à 1,4.

12. Séparateur à air selon la revendication 10 ou 11, **caractérisé en ce que** la surface de guidage (12) est orientée vers le bas à un angle (α) prédéfini de l'ordre de 60° à 75°, en particulier de 60° à 70°, par rapport à l'horizontale.

13. Séparateur à air selon la revendication 12, **caractérisé en ce que** l'angle (α) est essentiellement égal à 65°.

14. Séparateur à air selon une des revendications 10 à 13, **caractérisé en ce qu'**en dessous de l'étage de séparation principal (10), il est prévu au moins un autre étage de séparation (26) conçu comme séparation transversale.

15. Séparateur à air selon une des revendications 10 à 14, **caractérisé en ce que** la surface de guidage (12) est conçue au moins en partie en tant que plateau de soufflage qui est relié à une conduite (34).

16. Séparateur à air selon la revendication 15, **caractérisé en ce qu'**une soupape d'étranglement (36) est disposée dans la conduite (34) pour une régulation du courant d'air à travers le plateau de soufflage.
